# EUROPÄISCHE PATENTSCHRIFT

(11) **EP 0 884 580 B1**
(45) Veröffentlichungstag und Bekanntmachung des Hinweises auf die Patenterteilung: **18.09.2002**
(21) Anmeldenummer: 98102138.9
(22) Anmeldetag: 07.02.1998
(51) Int. Cl.: G01N 21/47, G01N 15/02

(54) **Faserdetektor zur Detektion des Streulichtes oder des Fluoreszenzlichtes einer flüssigen Suspension**
Fibre optic detector for detection of the scattered light or the fluorescence light of a liquid suspension
Détecteur à fibres optiques pour la détection de la lumière diffusée ou de la lumière de fluorescence d'une suspension liquide

(30) Priorität: 15.06.1997 DE 19725211
(43) Veröffentlichungstag der Anmeldung: 16.12.1998
(73) Patentinhaber: ALV-Laser Vertriebsgesellschaft mbH, 63225 Langen (DE)
(72) Erfinder: Peters, Rainer, 63225 Langen (DE)
(74) Vertreter: Meyer-Dulheuer, Karl-Hermann, Dr.

(56) Entgegenhaltungen:
- WO-A-88/01736
- DE-U- 29 710 396
- US-A- 4 806 018
- US-A- 5 155 549
- MACFADYEN A J ET AL: "FIBRE-OPTIC SYSTEMS FOR DYNAMIC LIGHT SCATTERING-A REVIEW" OPTICS AND LASER TECHNOLOGY, Bd. 22, Nr. 3, 1. Juni 1990, Seiten 175-187, XP000137235

## Beschreibung

Gegenstand der Erfindung ist ein Faserdetektor zur Detektion des Streulichtes oder des Fluoreszenzlichtes einer flüssigen Suspension.

Es ist bekannt, daß faseroptische Detektoren einerseits zur Messung der Streulichtintensitäten (statische Lichtstreuung), andererseits aber auch zur Messung von Streulichtintensitäts-Fluktuationen (dynamische Lichtstreuung), die durch Teilchendiffusionen im Lösungsmittel entstehen, eingesetzt werden können.

Aus der US-Patentschrift 5 155 549 ist bereits ein System zur Bestimmung der physikalischen Eigenschaften von Stoffen durch die Anwendung der dynamischen Lichtstreuung bekannt. Dabei wird das durch Streuung eines Laserstrahls erhaltene Streulicht durch Umwandlung in elektrische Signale detektiert. In diesem System ist eine optische Faser mit der Laserquelle und eine zweite optische Faser mit einem Photodetektor verbunden. Jede optische Faser ist mit einer Gradientenindexlinse ausgestattet, die in der Lage ist, einen gebündelten Laserstrahl in das Streumedium zu leiten.

Grundsätzlich lassen sich faseroptische Detektoren in drei Gruppen einteilen.
- Detektoren, deren Hauptvorteil in der kompakten Bauform gegenüber klassischen Detektoren liegt [siehe Photon Correlation & Scattering, August 21-24, 1996, Capri, Italy, in 1996 Technical Digest Series, Vol. 14, Optical Society America, pp. 23-25 und pp. 40-42]
- Detektoren, deren Hauptvorteil in der Modenselektion des Streulichts und des damit verbesserten Signal/Raumverhältnisses für die dynamische Lichtstreuung liegt [J. Ricka, Dynamic Light Scattering with Single-mode and Multi-mode Receivers, Applied Optics 32, 2860-2875 (1993)] und
- Detektoren, deren Hauptvorteil in der Verbesserung der Meßmöglichkeiten an hochkonzentrierten und/oder absorbierenden Suspensionen liegt.

Die vorliegende Erfindung kann der dritten der vorstehenden Gruppen zugeordnet werden und hat als Vorteil eine erhebliche Ausweitung der noch meßbaren Konzentrationsbereiche, die nahezu vollständige Unterdrückung von vielfachstreuung und einen nahezu beliebigen Arbeitsabstand des Detektors von der Probe. Diese Vorteile ermöglichen den Einsatz des erfindungsgemäßen Meßgerätes gerade in solchen Umgebungen, in denen dynamische Lichtstreumessungen bisher schwierig, wenn nicht gar unmöglich waren, zum Beispiel im Technikum, in Produktionsanlagen und bei Prozeßüberwachungen. Darüber hinaus eignet sich der erfindungsgemäße Faserdetektor auch zum Einsatz in weiteren Meßanwendungen, zum Beispiel zur Messung der Vielfachstreuung und zur Messung der Partikelanzahlfluktuation.

Die bisher verwendeten Faserdetektoren zur Messung an hochkonzentrierten Suspensionen lassen sich in zwei Hauptgruppen einteilen, nämlich in die
- "invasiven" Faserdetektoren, die eine Messung nur durch ein direktes Eintauchen in die Suspension erlauben [Wiese H. und Horn D. "Single-mode fibers in fibre-optic quasielastic light scattering: A study of the dynamics of concentrated latex dispersions" J. chem. Phys., Vol. 94, No. 10, 15 May 1991, S. 6429 bis 6443] - im folgenden Literaturstelle (1) genannt - und die
- "nicht-invasiven" Detektoren, die eine Messung auch in einer Küvette oder durch ein Glasfenster erlauben [Ansari R.R., Dhadwal H.S., Cheung H.M., Meyer W.V., "Microemulsion characterization by the use of a non-invasive backscatter fiber optic probe" Applied Optics, Vol, 32, No. 21, S. 3822 bis 3823, 20 July 1993] - im folgenden Literaturstelle (2) genannt.

Alle diese bekannten Detektoren müssen, um hohe Partikelkonzentrationen meßbar zu machen, eine Unterdrückung der Vielfachstreuung gewährleisten. Dies wird zumeist durch die Wahl eines Streuwinkels nahe an 180° und durch die Benutzung sehr kleiner tatsächlicher oder scheinbarer Streuvolumina, letztere durch Modenselektion, erreicht. Das Meßergebnis hängt dabei entscheidend von der Unterdrückung der Vielfachstreuung ab, da bei Messungen an hochkonzentrierten Suspensionen selten Partikelkonzentrationen unter 10 Volumenprozent auftreten und ohne eine solche Unterdrückung die Messung von dynamischer Lichtstreuung unmöglich wird. Lediglich bei dem als Diffusing Wave Spectroscopy bekannten Meßverfahren wird die Messung der reinen Vielfachstreuung verwendet, um Aussagen über die mittlere Teilchengröße zu erhalten. Im Gegensatz dazu kann mit dem erfindungsgemäßen Faserdetektor und dem damit ausgestatteten Meßgerät die Lichtstreuung nicht nur an konzentrierten Suspensionen, sondern auch an stark verdünnten Suspensionen gemessen werden.

Die bisher bekannten und zur Messung des Streulichtes von hochkonzentrierten Suspensionen eingesetzten Faserdetektoren werden wie folgt beschrieben:

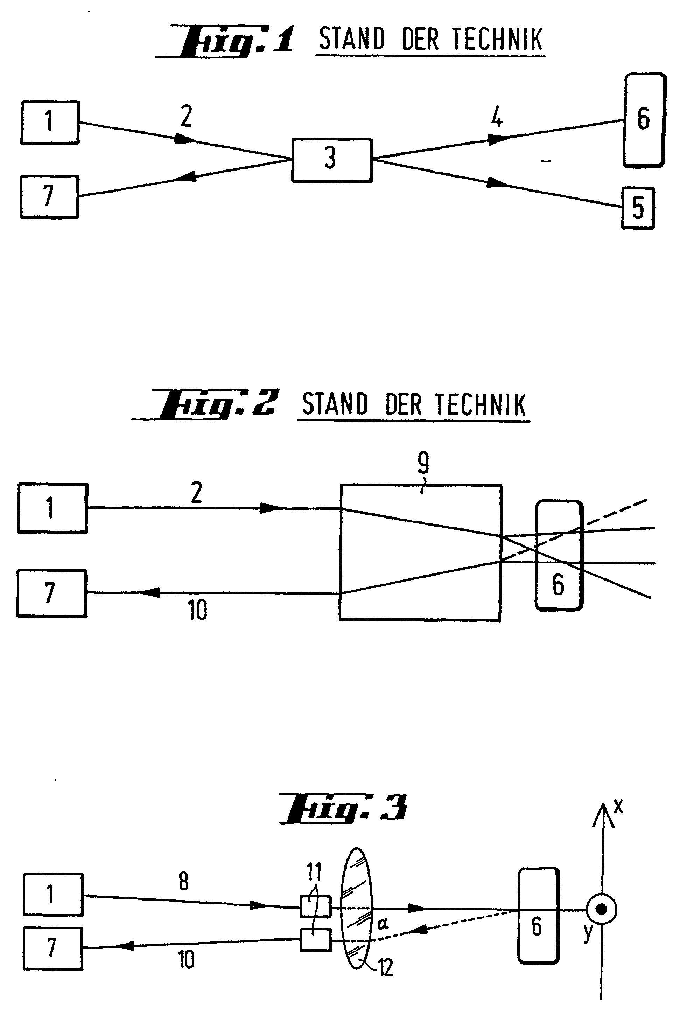

Fig. 1 zeigt einen dem Stand der Technik entsprechenden invasiven Faserdetektor, bei dem der von einem Laser 1 ausgesendete Strahl mittels einer einmodigen Faser 2 durch einen faseroptischen Strahlenteiler 3 aufgeteilt und ein Faserende 4 (Beleuchtungs/Detektionsfaser) nach erfolgter Teilung direkt in die Suspension eingetaucht wird.

Der Laserstrahl wird im allgemeinen im Verhältnis 5% : 95% geteilt, um eine möglichst verlustfreie Detektion des Streulichtes zu erreichen. Das bedeutet also, daß 5% des Laserstrahl in die Suspension eingeleitet werden, während die restlichen 95% in der Strahlenfalle 5 am zweiten Faserende gelöscht werden. Von der Suspension in der Küvette 6 zurückgestreutes Licht, das mit einem Streuwinkel von 180° zurück in die optische Faser 4 gestreut wird, läuft den genau gegenläufigen Weg, erreicht den Strahlenteiler 3 und wird zu 95% auf den Photodetektor 7, zum Beispiel einen Einzelphotonenzähler, gelenkt.

Dieses in der Literaturstelle [1] beschriebene Verfahren kann industriell zur Polymerisationskontrolle verwendet werden, hat allerdings zwei entscheidende Nachteile: Zum einen ist die zu erwartende Standzeit in einer konzentrierten Suspension nicht sehr lang, da Ablagerungen der Suspension am Faserausgang die Faser schnell erblinden lassen und eine Reinigung erforderlich machen, und zum anderen ist bei nicht allzu stark konzentrierten Suspensionen der am Faserausgang entstehende Rückreflex des Lasers sehr störend, da die Intensität des Reflexes ein vielfaches der Intensität des Streulichtes betragen kann. Dieser bekannte Faserdetektor ist deshalb für Messungen über einen großen Konzentrationsbereich ungeeignet und leidet außerdem an den Standzeitproblemen aller invasiven Detektoren. Das Problem des Rückreflexes kann zwar durch einen geeigneten Faseranschliff am Faserende gemildert, aber nicht wirklich gelöst werden, denn im Vergleich zu einer 50 µW Laserleistung am Faserausgang und damit günstigstenfalls einer 50 nW Reflexleistung ist die bei schwacher Konzentration zu erwartende sub-pW Streuleistung noch immer viel zu gering.

Dagegen ist das Problem der Ablagerungen der Suspension am Faserausgang, die zu einem Erblinden der Faser führt, mit der invasiven Technik wohl grundsätzlich nicht zu beherrschen.

Dieser Detektor ist bauartbedingt weder für die Vielfachstreuung, noch für die Partikelanzahlfluktuationsmessung geeignet, ersteres aufgrund der unbedingten Modenselektion und der damit einhergehenden Schwierigkeit, vielfach gestreutes Licht in die Faser zurückzustreuen, letzteres hauptsächlich wegen des viel zu starken Rückreflexes.

Fig. 2 gibt einen schematischen Überblick über den Strahlengang in einem herkömmlichen, nicht-invasiven Faserdetektor entsprechend Literaturstelle (2). Hierbei wird der vom Laser 1 ausgesendete Strahl mittels einer einmodigen Faser 2 und einer mechanischen Führung direkt zur Beleuchtung verwendet. Eine zweite Faser, die Detektionsfaser 10, wird durch dieselbe mechanische Führung 9 auf die Küvette 6 gerichtet. Die Beleuchtungsfaser und die Detektionsfaser haben die gleichen optischen Eigenschaften und sind typischerweise einmodige Fasern mit einer numerischen Apertur von ca. 0,1. Daraus ergibt sich ein überlappendes Streuvolumen für beide Fasern in einer bestimmten Entfernung und unter einem bestimmten Winkel. Nur Licht aus diesem Streuvolumen kann in die Detektionsfaser 10 eindringen und wird auf den Photodetektor 7, vorzugsweise einen Einzelphotonendetektor, geführt.

Die Anordnung beider Fasern zueinander ist nicht beliebig, sondern abhängig vom erwünschten Arbeitsabstand, den Glasdikken der Küvetten 6 und anderen Variablen. Typische, kommerziell verfügbare Anordnungen sind für eine Glasdicke von unter 1 mm und einen Arbeitsabstand von wenig über 1 mm optimiert. Daraus ergibt sich ein optimaler Streuwinkel von ca. 143°, also nicht sehr nahe an 180° und damit nicht im Optimum zur Unterdrückung der Vielfachstreuung.

Der wesentliche Nachteil dieses Detektors ist die starke Divergenz des austretenden Lichtes. Bei einer numerischen Apertur von 0,1 und den oben genannten Werten für den Arbeitsabstand und den Streuwinkel ergibt dies einen Strahldurchmesser an der Küvetteninnenseite von 300 µm und rund 1 mm am Ende des überlappenden Volumens. Weiterhin ist die optische Abbildung in der Küvette durch die starke Divergenz des Beleuchtungslichtes sehr stark von der Küvettengeometrie abhängig, so daß eine Optimierung entweder für runde oder rechteckige Küvetten unerläßlich ist. Außerdem wird mit zunehmendem Arbeitsabstand der Strahlungsradius immer größer, gleichzeitig das zurückgestreute Streulicht aber immer schwächer, weil es eine Funktion der Photonendichte ist. Demnach sind größere Arbeitsabstände mit einer solchen Optik nicht sinnvoll.

Aufgrund des viel zu großen Streuvolumens ist der Einsatz eines derartigen nicht-invasiven Faserdetektor zur Messung der Partikelanzahlfluktuation nahezu unmöglich, denn sowohl die Bedingung, daß höchstens etwa 10 Partikelchen im Streuvolumen anwesend sein müssen, als auch das Aufrechterhalten einer hohen Photonendichte im Volumen ist mit diesem Detektor nicht zu erreichen. Ein Einsatz für die Messung der Vielfachstreuung erscheint zwar grundsätzlich möglich, ist aber durch den dann ungenügend definierten Streuwinkel schwierig und hat bisher zu keiner praktischen Anwendung geführt.

Es stellte sich deshalb die Aufgabe, die Vorteile eines nicht-invasiven Faserdetektors mit den Vorteilen eines invasiven Faserdetektors zu verbinden, also hohe Photonendichte bei möglichst beliebigen Arbeitsabständen mit einem Streuwinkel nahe an 180° zu kombinieren.

Gelöst wird diese Aufgabe durch einen Faserdetektor zur Detektion des Streulichtes und des Fluoreszenzlichtes einer flüssigen Suspension mit den Merkmalen des Anspruchs 1.

Ein derartiger Faserdetektor ist in Fig. 3 dargestellt. Der von dem Laser 1 erzeugte Laserstrahl wird durch eine Beleuchtungsfaser 8 mit einer Gradientenindexlinse 11 am Faserausgang durch eine Linse oder ein Linsensystem 12 auf die Küvette 6 fokussiert. Bei der Beleuchtungsfaser handelt es sich entweder um eine einmodige Faser, eine polarisationserhaltende, einmodige Faser oder um eine polarisierende, einmodige Faser. Derartige Fasern sind kommerziell erhältlich von der Firma Wave Optics, USA. Am Faserausgang erhält man einen parallelen Strahlengang mit Gauß'schem Strahlprofil und optimaler Fokussierbarkeit. Der Brennpunkt ist in seiner Größe also nur noch abhängig von der Eintrittsapertur des Laserlichtes nach Verlassen der Faser und beim Auftreten auf die Linse, von der Linsenbrennweite und von der Lichtwellenlänge, d.h. er ist beugungslimitiert. Ebenso ist eine Detektionsfaser 10 so angebracht, daß sie durch die Linse Streulicht unter einem Streuwinkel α mittels einer Gradientenindexlinse 11 an den Photodetektor 7 weiterführt.

Durch die Verwendung von Fasern möglichst gleicher optischer Eigenschaften in der Beleuchtung und Detektion wird eine optimale Detektion des Streulichtes ermöglicht, d.h. die Benutzung von einmodigen oder wenigmodigen Fasern, also solchen mit einer Leitungscharakteristik von drei bis 10 Moden, ist sinnvoll. Läge die Detektion in derselben Ebene wie die Beleuchtung, d.h. in den Ebenen der X und Y Achse, so ergäbe sich eine konfokale Anordnung, wie im Fall des invasiven Detektors mit einem Streuwinkel von 180°. Da die Detektion jedoch in einer Ebene leicht verschoben angebracht ist, ergibt sich ein etwas kleinerer Streuwinkel.

Die Vorteile dieses Detektors gegenüber der Detektoren des Standes der Technik sind folgende:
- Es tritt kein Rückreflex auf, da eine klare räumliche Trennung von Beleuchtung und Detektion sichergestellt ist;
- Der sehr kleine Strahldurchmesser der Beleuchtung/Detektion im Bereich von 50 bis 100 µm stellt sicher, daß keine große Abhängigkeit des Strahlverlaufs von der Küvettengeometrie gegeben ist; das bedeutet, daß runde und rechteckige Küvetten gleichermaßen einsetzbar sind und kein Einfluß auf das Meßergebnis durch unterschiedliche Fensterdikken eintritt;
- Sehr hohe Photonendichten sind erreichbar durch die Fokussierung der Beleuchtung und der Detektion;
- Streuwinkel sind sehr nahe an 180° möglich; praktisch erprobt wurde ein Streuwinkel von 172,9° mit 5 mm Faserseparation und 40 mm Brennweite der Linse sowie ein Streuwinkel von 176,4° mit 5 mm Faserseparation und 80 mm Brennweite der Linse;
- Der Arbeitsabstand ist frei wählbar durch die Benutzung von Linsen unterschiedlicher Brennweite.

Ein weiterer Vorteil des erfindungsgemäßen Faserdetektors besteht darin, daß er durch Hinzufügung weiterer Detektionsfasern so modifiziert werden kann, daß er einen Winkelbereich bis nahe 135° Streuwinkel überstreicht. Allerdings ist dann ein Linsensystem von höchster Güte und einer 1:1 Öffnung erforderlich.

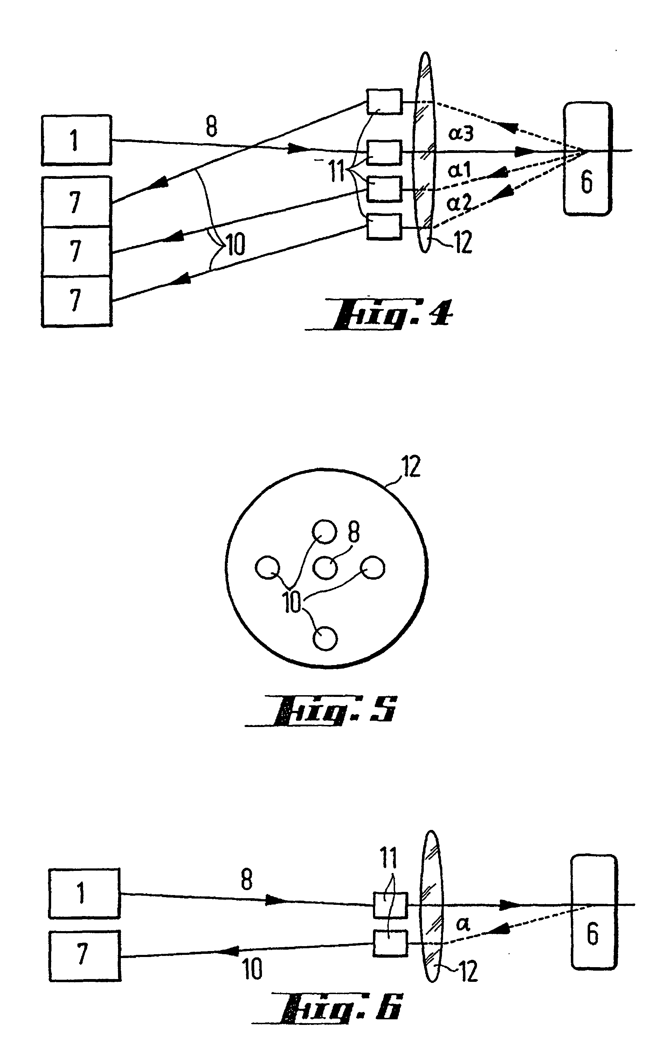

Eine derartige Anordnung ist in Fig. 4 dargestellt. Dabei wird der von dem Laser 1 erzeugte Laserstrahl durch die Beleuchtungsfaser 8 und die Gradientenindexlinse 11 durch die Linse oder das Linsensystem 12 auf die Küvette 6 fokussiert. Durch eine Vielzahl von unterschiedlich angebrachten Detektionsfasern wird durch die Linse oder das Linsensystem 12 Streulicht unter verschiedenen Streuwinkeln α₁, α₂ und α₃ mittels Gradientenindexlinsen 11 und über Detektionsfasern 10 zu den Photodetektoren 7 geleitet.

Fig. 5 zeigt eine Frontansicht durch die Linse oder das Linsensystem 12 mit einer zentralen Beleuchtungsfaser 8 und mehreren beliebig angeordneten Detektionsfasern, die das Streulicht an den Photodetektor weiterleiten.

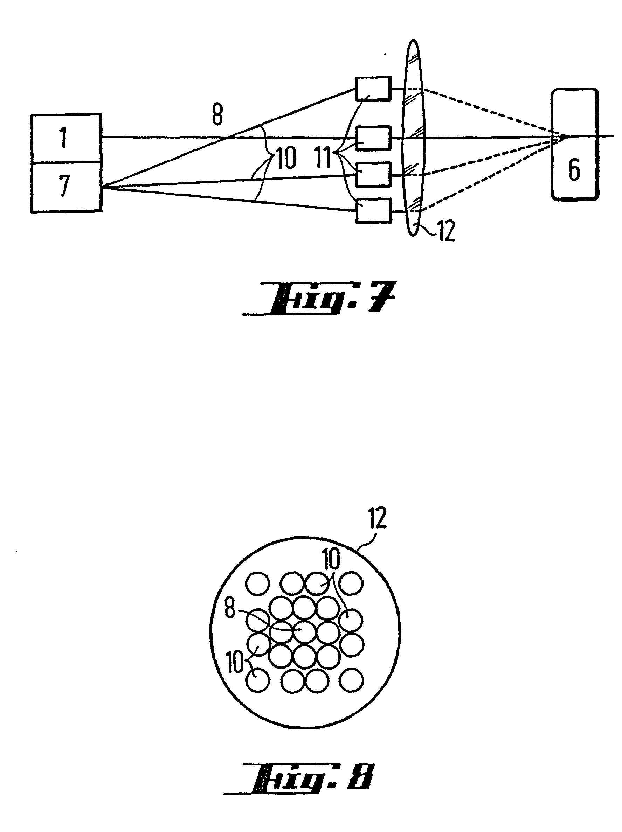

Die vielseitigen Einsatzmöglichkeiten des erfindungsgemäßen Faserdetektors und eines damit ausgestatteten Meßgerätes zeigen sich beim Einsatz des Faserdetektors zur Messung der Vielfachstreuung gemäß Fig. 6. Bei dieser Meßmethodik wird das vielfach gestreute Licht, d.h. Licht, das nicht nur einmal an einem Teilchen in einer Richtung, sondern vielfach an einem oder mehreren Teilchen in gleiche oder verschiedene Richtungen gestreut wurde, nicht durch optische oder sonstige Maßnahmen unterdrückt, sondern die statistisch einmaligen Besonderheiten des vielfach gestreuten Lichts untersucht. Man benötigt dazu einen Detektor, der gerade möglichst keine Unterdrückung der Vielfachstreuung bietet, wie das mit dem erfindungsgemäßen Faserdetektor leicht realisierbar ist und zwar durch die Detektion des Streulichtes weit außerhalb des Brennpunktes. Hier wird nur noch vielfach gestreutes Licht in die Detektionsfaser gestreut. Da bei Verwendung einer Linse mit langer Brennweite der Streuwinkel sehr nahe bei 180° liegt, wird so gleichzeitig auch ein weiteres Problem der Vielfachstreuung, nämlich die Messung möglichst nahe entweder am Streuwinkel von 180° oder bei einem Streuwinkel 0° (Transmissionsmessung) gelöst.

Fig. 6 zeigt die erfindungsgemäße Anordnung des Faserdetektors, bei dem eine relativ langbrennweitige Linse, zum Beispiel eine mit einer Brennweite von 80 mm, eingesetzt wird. Damit wird eine deutlich vergrößerte Entfernung der Küvette zum Detektor benötigt, um die Vielfachstreuung von 180° zu messen. Weitere optische Veränderungen sind nicht notwendig.

Schließlich ist der Einsatz des erfindungsgemäßen Faserdetektors und eines damit ausgestatteten Meßgeräts auch zur Messung der Partikelanzahlfluktuation mittels Streulichtmessung oder Fluoreszenzlichtmessung möglich. Bei dieser Meßmethodik ist die Partikelkonzentration im Meßvolumen so klein, daß die Anzahl der Partikel im Volumen statistisch nicht mehr konstant ist, sondern eine hohe Varianz aufweist. Die Auswertung der Varianz im gestreuten Licht oder, bei eigener oder erzwungener Fluoreszenz der Partikel, des Fluoreszenzlichts erlaubt die Anzahl und den Diffusionskoeffizienten der Partikel zu bestimmen, wohingegen die Auswertung der dynamischen Lichtstreuung aufgrund der kleinen Partikelanzahl hier versagt, denn dafür sind erheblich mehr als 1.000 Partikel im Volumen nötig. Die Messung der Partikelanzahlfluktuation verlangt ein möglichst kleines Beleuchtungsvolumen, um die Anzahlvarianz möglichst groß zu gestalten. Dies läßt sich durch die Auswahl einer Linse oder des Linsensystems mit möglichst kleiner Brennweite leicht bewerkstelligen. Für 10 mm Brennweite der Linse ist die theoretische Fokalspot-Größe bereits auf ca. 8 bis 10 µm gesunken, bei einer Brennweite von 5 mm erreicht man eine Fokalspot-Größe von 4 bis 5 µm. Zusätzlich müssen viele Detektorfasern benutzt werden, am besten zirkular verteilt um die Beleuchtungsfaser, wie es in den Fig. 7 und 8 dargestellt ist, damit im Falle sehr weniger Teilchen im Streuvolumen die Empfindlichkeit bezüglich des gestreuten Lichtes erhöht wird.

Da in diesem Experiment der Streuwinkel keine Rolle spielt, sondern einzig die zeitliche Variation des gesamten Streuoder Fluoreszenzlichts im Streuvolumen betrachtet wird, können alle Detektionsfasern auf einen einzigen Einzelphotonenzähler geführt werden und es muß keine Modenselektion durch die Fasern stattfinden. Das bedeutet, daß sowohl einmodige, wenigmodige als auch vielmodige Fasern verwendet werden können.

Im Falle der Messung des Fluoreszenzlichts muß zusätzlich zur wirksamen Unterdrückung des primären Anregungslichtes ein Filter vorgesehen werden, der das Fluoreszenzlicht durchläßt, das Anregungslicht dagegen herausfiltert. Dieser Filter wird vor dem Einzelphotonenzähler plaziert.

### Bezugszeichenliste:

- 1: Laser
- 2: einmodige Faser
- 3: Strahlenteiler
- 4: Beleuchtungs- und Detektionsfaser
- 5: Strahlenfalle
- 6: Küvette mit Suspension
- 7: Photodetektor
- 8: Beleuchtungsfaser
- 9: mechanische Führung
- 10: Detektionsfaser
- 11: Gradientenindexlinse
- 12: Linse oder Linsensystem

## Patentansprüche

1. Faserdetektor zur Detektion des Streulichtes oder des Fluoreszenzlichtes einer flüssigen Suspension, der
einen zur Erzeugung eines Laserstrahles dienenden Laser (1)
eine einmodige oder mehrmodige optische Faser (8) mit einer Gradientenindexlinse (11) am Faserausgang zur Erzeugung paralleler Lichtstrahlen
- eine Sammellinse oder ein Sammellinsensystem (12) zur Fokussierung der parallelen Lichtstrahlen auf einen Punkt innerhalb der Suspension sowie
- eine weitere einmodige oder mehrmodige, mit einer weiteren Gradientenindexlinse (11) am Fasereingang versehene und mit einem Photodetektor (7) verbundene optische Faser (10) zur Detektion des zurück gestreuten und durch dieselbe Sammellinse oder dasselbe Sammellinsensystem parallelisierten Lichtes enthält.

2. Faserdetektor nach Anspruch 1, **dadurch gekennzeichnet, dass** er zur Beleuchtung eine polarisationserhaltende einmodige Faser enthält.

3. Faserdetektor nach Anspruch 1, **dadurch gekennzeichnet, dass** er zur Beleuchtung eine polarisierende einmodige Faser enthält.

4. Faserdetektor nach einem der Ansprüche 1 bis 3, **dadurch gekennzeichnet, dass** er zur Detketion des durch dieselbe Sammellinse oder dasselbe Sammellinsensystem zurück gestreuten Lichtes mehrere, unter verschiedenen Streuwinkeln angeordnete, einmodige oder mehrmodige, mit jeweils einer Gradientenindexlinse am Fasereingang versehene und mit mindestens einem Photodetektor verbundene optische Fasern enthält.

5. Faserdetektor nach Anspruch 4, **dadurch gekennzeichnet, dass** die Fasern zur Detektion zirkular um die Beleuchtungsfaser angeordnet sind.

6. Faserdetektor nach einem der Ansprüche 1 bis 5, **dadurch gekennzelchnet, dass** er zur Messung des Fluoreszenzlichtes vor dem Photodetektor ein Lichtfilter zur Absorption des primären Anregungslichtes enthält.

## Claims

1. Fibre detector for detecting the scattered light or the fluorescent light of a liquid suspension, which contains
a laser (1) serving for generating a laser beam,
a monomode or multimode optical fibre (8) with a graded index lens (11) at the fibre output for the generation of parallel light beams
- a converging lens or a converging lens system (12) for focusing the parallel light beams onto a point within the suspension, and
- a further monomode or multimode optical fibre (10), provided with a further graded index lens (11) at the fibre input and connected to a photodetector (7), for the detection of the backscattered light parallelized by the same converging lens or the same converging lens system.

2. Fibre detector according to Claim 1, **characterized in that** it contains a polarization-maintaining monomode fibre for illumination purposes.

3. Fibre detector according to Claim 1, **characterized in that** it contains a polarizing monomode fibre for illumination purposes.

4. Fibre detector according to one of Claims 1 to 3, **characterized in that** it contains, for the detection of the light backscattered by the same converging lens or the same converging lens system, a plurality of monomode or multimode optical fibres which are arranged at different scattering angles, are provided with a respective graded index lens at the fibre input and are connected to at least one photodetector.

5. Fibre detector according to Claim 4, **characterized in that** the fibres, for detection, are arranged circularly around the illumination fibre.

6. Fibre detector according to one of Claims 1 to 5, **characterized in that** it contains, for the measurement of the fluorescent light, upstream of the photodetector, a light filter for absorption of the primary excitation light.

## Revendications

1. Détecteur à fibres optiques pour la détection de la lumière diffusée ou de la lumière de fluorescence d'une suspension liquide qui comprend
- un laser (1) destiné à produire un rayon laser,
- une fibre optique monomodale ou multimodale (8) avec une lentille à gradient d'indice (11) à la sortie de la fibre pour produire des rayons lumineux parallèles,
- une lentille de convergence ou un système de lentilles de convergence (12) pour concentrer les rayons lumineux parallèles en un point à l'intérieur de la suspension, ainsi que
- une autre fibre optique monomodale ou multimodale (10) munie d'une autre lentille à gradient d'indice (11) à l'entrée de la fibre et reliée à un détecteur photoélectrique (7) pour la détection de la lumière dispersée renvoyée et rendue parallèle par la même lentille de convergence ou le même système de lentilles de convergence.

2. Détecteur à fibres optiques selon la revendication 1, **caractérisé en ce qu'**il contient pour l'éclairage une fibre monomodale à maintien de polarité.

3. Détecteur à fibres optiques selon la revendication 1, **caractérisé en ce qu'**il contient pour l'éclairage une fibre monomodale polarisante.

4. Détecteur à fibres optiques selon l'une des revendications 1 à 3, **caractérisé en ce que** pour la détection de la lumière diffusée renvoyée par la même lentille de convergence ou le même système de lentilles de convergence, il comprend plusieurs fibres optiques monomodales ou multimodales disposées selon différents angles de dispersion, chacune munie d'une lentille à gradient d'indice à l'entrée de la fibre et reliée à au moins un détecteur photoélectrique.

5. Détecteur à fibres optiques selon la revendication 4, **caractérisé en ce que** les fibres sont disposées en cercle autour de la fibre d'éclairage pour la détection.

6. Détecteur à fibres optiques selon l'une des revendications 1 à 5, **caractérisé en ce qu'**il comprend un filtre optique avant le détecteur photoélectrique pour absorber la lumière d'excitation primaire afin de mesurer la lumière de fluorescence.
